(19) Europäisches Patentamt / European Patent Office / Office européen des brevets

(11) **EP 2 009 313 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
***F16D 48/06*** *(2006.01)*

(21) Anmeldenummer: **08010675.0**

(22) Anmeldetag: **12.06.2008**

(54) **Verfahren zur Adaption einer Kupplungskennlinie bei vorhandener Kupplungshysterese**

Method for adapting a coupling characteristic with coupling hysteresis present

Procédé d'adaptation d'une caractéristique de couplage en cas d'hystérèse de couplage existante

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.06.2007 DE 102007029209**

(43) Veröffentlichungstag der Anmeldung:
**31.12.2008 Patentblatt 2009/01**

(73) Patentinhaber: **Schaeffler Technologies AG & Co. KG**
**91074 Herzogenaurach (DE)**

(72) Erfinder: **Reibold, Ekkehard, Dr.**
**77933 Lahr (DE)**

(56) Entgegenhaltungen:
**EP-A2- 1 418 083        US-A1- 2002 128 763**
**US-A1- 2004 064 232**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung befasst sich mit einem Verfahren zur Adaption einer Kupplungskennlinie, nach dem Oberbegriff des Anspruchs 1.

Bei Fahrzeugen mit einer oder mehreren automatisierten Kupplungen wird, unabhängig davon, ob das Getriebe ebenfalls automatisiert ist, das Kupplungsverhalten oftmals durch eine Software modelliert und während des Fahrbetriebs in häufigen Abständen adaptiert. Dies erlaubt die Kupplung so anzusteuern, dass den Komfortansprüchen an eine automatisierte Kupplung genügt wird.

Für die Steuerung der automatisierten Kupplungen werden oftmals Kupplungskennlinien verwendet. Solche Kupplungskennlinie sind Darstellungen des von der oder den Kupplungen übertragbaren Drehmoments über die Stellung des Aktors, der die Kupplung öffnet und/oder schließt. Über solche Darstellungen kann aus der Stellung des Kupplungsaktors auf das von der Kupplung übertragbare Drehmoment geschlossen werden oder von dem übertragbaren Drehmoment auf die Stellung des Aktors.

Teilweise berücksichtigen die Kupplungsmodelle auch Abhängigkeiten von der Kupplungstemperatur, da es dadurch zur Kupplungsdeformation kommen kann. Auch kann eine Änderung der Kupplungstemperatur zu einer Änderung des Reibwerts des Kupplungsbelags führen.

Weiter werden die Motordrehzahl des Antriebsmotors berücksichtigt, da hohe Drehzahlen zu Fliehkrafteffekten führen können und auch die Schlupfdrehzahl, deren Abhängigkeit durch das Fluid bei Nasskupplungen bedingt ist.

Jedoch weisen Kupplungen häufig eine Hysterese auf. Die durch die Kupplung übertragbaren Momente sind also für dieselbe Aktorposition verschieden groß, je nachdem, ob die Kupplung gerade geöffnet oder geschlossen wird.

Derartige Adaptionen der Kupplungskennlinie sind beispielsweise in der EP 1 418 083 A2 sowie der US 2004/064232 A1 offenbart.

Wird eine solche Hysterese nicht berücksichtigt, so erhöht dies die Streuung in den Adaptivparametern des Kupplungsmodells. Damit steigt der mittlere Fehler im eingestellten Kupplungsmoment, was zu einer Minderung im Fahrkomfort führen kann.

Aufgabe der vorliegenden Erfindung ist es, ein Verfahren zu schaffen, das geeignet ist, eine Kupplungskennlinie an das Verhalten einer Kupplung anzupassen, die eine Hysterese aufweist.

Diese Aufgabe wird gelöst durch ein Verfahren gemäß Anspruch 1. Weitere bevorzugte Ausführungsformen finden sich in den Unteransprüchen.

Insbesondere wird die Aufgabe gelöst durch ein Verfahren zur Adaptation einer Kupplungskennlinie, die insbesondere eine Hysterese aufweist, wobei mindestens eine aus der Kennlinie zu erhaltende Kenngröße mit einer entsprechenden gemessenen Kenngröße verglichen wird und falls der Vergleich ergibt, dass zwischen den beiden Kenngrößen eine Abweichung besteht, die größer ist als ein vorbestimmter Wert, eine Angleichung der Kupplungskennlinie vorgenommen wird.

Ziel des Verfahrens ist es also eine Kupplungskennlinie zu generieren, die an die beiden Hystereseäste des tatsächlichen Kupplungsverhaltens angepasst ist, bevorzugt zwischen den Hystereseästen liegt. Damit kann vermieden werden bei der Verwendung der Kupplungskennlinie die Vergangenheit berücksichtigen zu müssen und so weitere Parameter bei der Ermittlung der Aktorposition und/oder des übertragenen Moments, wie zum Beispiel, ob die Kupplung gerade geöffnet wird oder geschlossen wird, berücksichtigen zu müssen.

Andererseits wird versucht eine Kupplungskennlinie zu erhalten, die eine möglichst genaue Abbildung des tatsächlichen Kupplungsverhaltens ist, denn so kann die Streuung der Adaptivparameter und damit der mittlere Fehler im eingestellten Kupplungsmoment klein gehalten werden.

Erreicht wird dies, indem nicht alle Abweichungen der gemessenen Kenngrößen von den aus der Kennlinie erhaltenen Kenngrößen bei der Adaption der Kupplungskennlinie berücksichtigt werden. Sind die Abweichungen sehr klein, kann davon ausgegangen werden, dass die Abweichung aufgrund der Hysterese in dem Kupplungsverhalten herrührt und keine Adaption der Kupplungskennlinie notwendig ist.

Ist jedoch die Abweichung zwischen der gemessenen Kenngröße und der aus der vorliegenden Kennlinie Kenngröße größer als ein bestimmter Wert, so kann davon ausgegangen werden, dass die vorliegende Kennlinie nicht optimal auf das reale Kupplungsverhalten adaptiert ist und eine weitere Adaption nötig ist.

Grundsätzlich ist die Erfindung nicht auf die Messung und/oder Berechnung einer bestimmten Kenngröße beschränkt, jedoch ist es vorteilhaft wenn die vorgenannte gemessene Kenngröße das von der Kupplung übertragbare Moment ist. So wird das Drehmoment gemessen, das in der Stellung der Kupplung maximal von der Kupplung übertragen werden kann. Dies ist insbesondere möglich, wenn das maximale Drehmoment übertragen wird, die Kupplung also einen Schlupf aufweist. Das dann von der Kupplung übertragene Drehmoment kann dann aus dem Verhalten des Antriebmotors bzw. der Fahrzeugbeschleunigung und/oder - Geschwindigkeit errechnet werden.

Auch kann die Kenngröße die Motordrehzahl sein. Dazu wird angenommen, dass die Motordrehzahl von dem durch die Kupplung übertragenen Drehmoment abhängig ist. Weist die Kupplung einen Schlupf auf, so ist das von der Kupplung übertragene Drehmoment gleich dem maximal in der Kupplungssituation übertragbare Drehmoment. Ist das vom Motor aufgebrachte Drehmoment bekannt, so kann aus der Drehzahländerung geschlossen werden, wie hoch das maximal übertragbare Moment ist. Die Drehzahländerung des Motors ist einfach zu erfassen, z.B. über einen Drehzahlmesser.

Allgemein ist es möglich, dass eine Vielzahl von verschiedenen Vergleichen zwischen den gemessenen und den aus der Kennlinie erhaltenen Kennzahlen zur Adaption der Kennlinie herangezogen werden, in einer besonders vorteilhaften Ausgestaltung der Erfindung wird eine Differenz zwischen der gemessenen und der aus der Kennlinie erhaltenen Wert errechnet. Die Differenzbildung ist einerseits linear und so leicht analytisch zu erhalten, andererseits kann sie unkompliziert in ein bestehendes Adaptionsprogramm eingefügt werden.

Die Abweichung kann linear oder nichtlinear auf die Kennlinie zurückgekoppelt werden. Eine solche Rückkopplung erlaubt es die Kennlinie bei jeder Messung der Abweichung schrittweise immer weiter an das tatsächliche Kupplungsverhalten anzupassen. Dabei kann durch die schrittweise Adaptation auch Veränderungen des Kupplungsverhaltens, die durch Verschleiß oder Alterung auftreten können adaptiert werden.

Bevorzugt ist der vorbestimmte Wert als Betrag die Hälfte der Hysteresebreite der Kupplungskennlinie. Da die Kupplungskennlinie bevorzugt zwischen den beiden Hystereseästen liegt ist es besonders vorteilhaft, wenn nur Abweichungen von der Kennlinie, die größer sind als die Hysteresebreite als Fehler erfasst werden und zu einer Anpassung der Kupplungskennlinie führen. Abweichungen, die kleiner sind als die halbe Hysteresebreite werden dabei nicht weiter registriert.

Die halbe Hysteresebreite kann dabei als Wert voreingestellt sein, oder durch die Messungen erhalten werden.

Erfindungsgemäß Vergleich darin besteht einen Adaptationsfehler zu bestimmen und zu ermitteln ob der Adaptionsfehler negativ oder positiv ist und abhängig vom Vorzeichen des Fehlers ein Zähler, der für den Vorgang "Kupplung schließen" unterschiedlich ist zum Vorgang "Kupplung öffnen", hoch zu zählen oder herunterzuzählen.

Durch dieses statistische Verfahren kann auf die Ermittlung der Totzone über die halbe Hysteresebreite verzichtet werden und so über einen iterativen Prozess eine gute Adaptation erreicht werden.

Erfindungsgemäß wird, wenn der Zähler für das Schließen der Kupplung kleiner ist als das negative einer bestimmten Schwelle und der Zähler für das Öffnen der Kupplung größer ist als die Schwelle die Totzone vergrößert. Ist der Zähler für dass Schließen der Kupplung größer als eine bestimmte Schwelle und der Zähler für das Öffnen der Kupplung kleiner als das Negative der Schwelle, so wird die Totzone verkleinert.

Im Weiteren wird die Erfindung durch zwei Ausführungsbeispiele anhand der Zeichnungen weiter beispielhaft erläutert.

So zeigt:

Figur 1 ein Kupplungsmoment- Verstellweg Diagramm,
Figur 2 eine Rückkopplungsfunktion für Adaptivparameter.

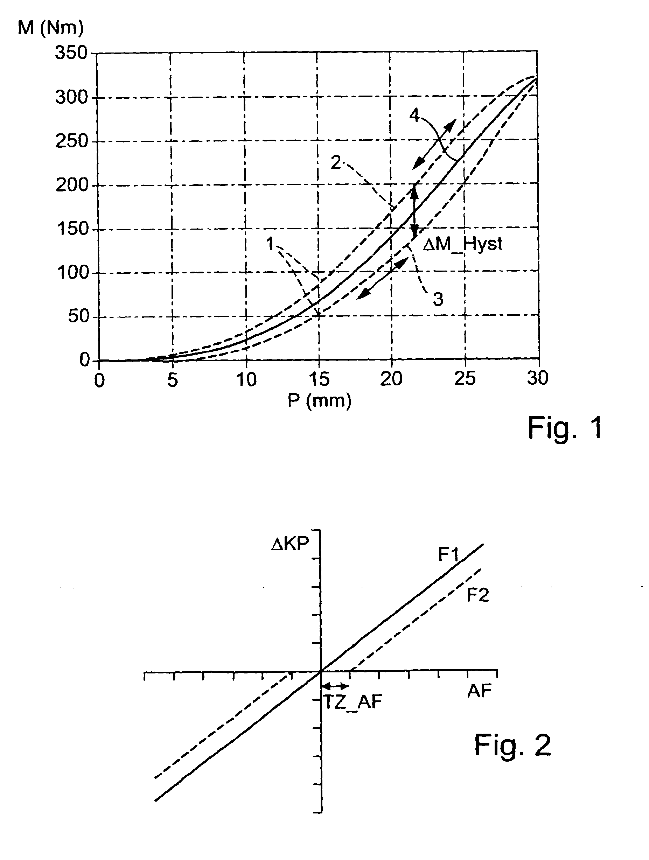

Das Kupplungsverhalten einer Fahrzeugkupplung ist in Fig. 1 dargestellt. Dort ist das von der Kupplung übertragbare Moment M über der Position P der Kupplung aufgetragen. Die Kupplungskennlinie 1 zeigt dabei eine Hysterese mit den beiden Hystereseästen 2 und 3. Der eine Hystereseast 2 gibt dabei das Verhalten der Kupplung beim Öffnen der Kupplung an, der zweite Hystereseast 3 das Verhalten beim Schließen der Kupplung. Die Kupplungskennlinie 4, die zwischen den beiden Hystereseästen 2 und 3 platziert ist, soll dabei an die Hystereseäste adaptiert werden.

Zur Adaption eines Kupplungsparameters KP, wie zum Beispiel des maximal übertragbaren Moments M, wird ein Adaptionsfehler AF bestimmt. Dieser Adaptionsfehler AF kann zum Beispiel ein Momentenfehler $\Delta M$, also die Differenz zwischen einem gemessenen und dem aus der Kennlinie erhaltenen Moment sein oder aber auch ein Drehzahlfehlerer $\Delta n$, als Differenz zwischen der gemessenen und der geschätzten Motordrehzahl , bedingt durch einen vorhandenen Momentenfehler. Dieser Adaptionsfehler wird linear auf den Kupplungsparameter zurückgekoppelt entsprechend der Gleichung:

$$KP\_neu = KP\_alt - K1 * AF$$

wobei K1 eine Rückkopplungskonstante darstellt.

Die Änderung des Kupplungsparameters $\Delta KP = F1(AF)=K1 *AF$ ist in Fig. 2 dargestellt. Wird eine solche Rückkopplung gewählt, nähert sich die adaptierte Kennlinie 4 dem aktuellen Zustand immer weiter an. Dadurch wird bei einem häufigen Öffnen und Schließen der Kupplung für die adaptierte Kennlinie ein ganzes Streuband, das zwischen den Hystereseästen 2 und 3 liegt.

Wird nun eine Totzone TZ_AF in die Rückkopplungsfunktion eingeführt, die bewirkt, dass Abweichungen, in die dieser Totzone liegen nicht oder wesentlich schwächer berücksichtigt werden als Abweichungen, die außerhalb der Totzone liegen, so wird das resultierende Streuband für die adaptierte Kennlinie geringer. Verwendet man als Adaptionsfehler den Momentenfehler ΔM und wählt als Totzone TZ_ΔM entsprechend die Momentenhysterese ΔM_Hyst (Fig. 1) zu

$$TZ\_\Delta M = 0{,}5 * \Delta M\_Hyst$$

So erhält man als Folge der Adaption die oben erwähnte mittlere Kupplungskennlinie 4. Durch weitere Vergrößerung der Totzone erhält man wiederum ein Streuband, das über längere Zeit jedoch nicht vollständig abgedeckt wird. Als mittlere adaptierte Kennlinie erhält man dann nicht zwangsläufig die oben erwähnte mittlere Kupplungskennlinie.

Dabei ist jedoch zu beachten, dass die Momentenhysterese ΔM_Hyst entlang der Kupplungskennlinie in der Regel nicht konstant ist. Ihr Wert sollte demnach entlang der Kupplungskennlinie gemittelt werden. Die gemittelte Momentenhysterese ΔM_Hyst wird mit <ΔM_Hyst> bezeichnet.

Damit ergibt sich als ideale Totzone:

$$TZ\_\Delta M = 0.5 * <\Delta M\_Hyst>.$$

Wird als Adaptionsfehler nicht der Momentenfehler ΔM verwendet, so kann man aus dem Adaptionsfehler einen effektiven Momentenfehler $\Delta M_{eff}$ bestimmen:

$$\Delta M_{eff} = F3(AF)$$

Unter der Verwendung der Umkehrfunktion $F3^{-1}$ ergibt sich die entsprechende Totzone für den Adaptionsfehler AF:

$$TZ\_AF = 0{,}5 * F3^{-1}(\Delta M\_Hyst)$$

Weiter kann auch eine andere Methode zur Bestimmung der Totzone verwendet werden, insbesondere da die Kupplungshysterese weder über die Lebensdauer der Kupplung noch über die Serienstreuung konstant ist.

Dabei werden die Adaptionsfehler getrennt für die Vorgänge "Kupplung Schließen" und "Kupplung öffnen" statistisch ausgewertet. In einer einfachen Ausführung wird ein Zähler N (entweder $N_{zu}$ für den Vorgang "Kupplung schließen" oder $N_{Offen}$ für den Vorgang "Kupplung öffnen") hochgezählt, wenn der Adaptionsfehler positiv ist oder heruntergezählt, wenn der Adaptionsfehler negativ ist. Statt der Abfrage, ob der Adaptionsfehler positiv oder negativ ist kann auch bestimmt werden, ob ein Fehler größer als ein bestimmter Schwellenwert ist bzw kleiner als ein bestimmter negativer Schwellenwert ist.

Besitzen die beiden Zähler entweder $N_{offen}$ und $N_{zu}$ verschiedene Vorzeichen und sind die Zählerwerte statistisch signifikant, so kann die Totzone nach folgender Gleichung angepasst werden:

$$N_{zu} < -N_{sch} \text{ und } N_{offen} > N_{sch} => TZ\_AF \text{ vergrößern bzw.}$$

$$N_{zu} > N_{sch} \text{ und } N_{offen} < -N_{sch} => TZ\_AF \text{ verkleinern.}$$

Durch die Verwendung des Adaptionsalgorithmus kann auf die ansonsten eventuell notwendige Bestimmung der Abhängigkeit zwischen Adaptionsfehler und effektiven Momentenfehler $\Delta M_{eff}$ verzichtet werden.

**Bezugszeichenliste**

| | |
|---|---|
| 1 | Hysterese |
| 2 | Hystereseast "Kupplung öffnen" |
| 3 | Hystereseast "Kupplung schließen" |
| 4 | Kennlinie |
| M | Moment |
| P | Position der Kupplung |
| AF | Adaptionsfehler |
| $\Delta$KP | Äderung des Kupplungsparameters |
| KP | Kupplungsparameter |
| TZ_AF | Totzone |

**Patentansprüche**

1. Verfahren zur Adaptation einer Kupplungskennlinie (4), die eine Hysterese aufweist, wobei mindestens eine aus der Kennlinie (4) zu erhaltende Kenngröße mit (M,n) einer entsprechenden gemessenen Kenngröße verglichen wird und falls der Vergleich ergibt, dass zwischen den beiden Kenngrößen eine Abweichung besteht, die größer ist als ein vorbestimmter Wert (TZ_AF), eine Angleichung der Kupplungskennlinie (4) vorgenommen wird, wobei der Vergleich in einer Bestimmung eines Adaptionsfehlers (AF) durch Differenzbildung zwischen der gemessenen und der aus der Kennlinie erhaltenen Kenngröße ($\Delta$M,$\Delta$n) **dadurch gekennzeichnet** besteht der Vergleich darin besteht den Adaptionsfehler (AF) zu bestimmen und ermittelt wird, ob der Adaptionsfehler (AF) negativ oder positiv ist und abhängig vom Vorzeichen des Fehlers ein Zähler ($N_{zu}$,$N_{offen}$) der für den Vorgang "Kupplung schließen" unterschiedlich ist zum Vorgang "Kupplung öffnen", hochgezählt oder heruntergezählt wird , dass wobei wenn der Zähler für das Schließen der Kupplung ($N_{zu}$) kleiner ist als das Negative einer bestimmten Schwelle (-Nsch) und der Zähler für das Öffnen Kupplung ($N_{offen}$) größer ist als die Schwelle (Nsch), so wird der vorbestimmte Wert (TZ_AF) vergrößert, ist der Zähler für das Schließen der Kupplung ($N_{zu}$) größer als eine bestimmte Schwelle (Nsch) und der Zähler für das Öffnender Kupplung ($N_{offen}$) kleiner als das Negative der Schwelle (-Nscht), so wird der vorbestimmte Wert (TZ_AF) verkleinert.

2. Verfahren nach einem der vorhergehenden Ansprüche, **dadurch gekennzeichnet, dass** die Kenngröße das von der Kupplung übertragbare Drehmoment (M) ist.

3. Verfahren nach einem der vorhergehenden Ansprüche, **dadurch gekennzeichnet, dass** die Kenngröße die Motordrehzaht (n) ist.

4. Verfahren nach einem der vorhergehenden Ansprüche, **dadurch gekennzeichnet, dass** die Abweichung linear oder nichtlinear auf die Kennlinie(4) zurückgekoppelt wird.

5. Verfahren nach einem der vorhergehenden Ansprüche, **dadurch gekennzeichnet, dass** der vorbestimmte Wert (TZ_AF) als Betrag die Hälfte der Hysteresebreite ($\Delta$M_Hyst) Kupplungskennlinie (4) ist.

6. Verfahren nach einem der Ansprüche 1 bis 5, **dadurch gekennzeichnet, dass** der vorbestimmte Wert die Hälfte der mittleren Hysteresebreite ($\Delta$M_Hyst) der Kupplungskennlinio (4) ist.

**Claims**

1. Method for adapting a clutch characteristic curve (4) which has a hysteresis, at least one parameter (M, n) to be obtained from the characteristic curve (4) being compared with a corresponding measured parameter and, if the result of the comparison is that there exists between the two parameters a deviation which is greater than a predetermined value (TZ_AF), a matching of the clutch characteristic curve (4) is undertaken, the comparison consisting of a determination of an adaptation error (AF) by forming the difference between the measured parameter and the parameter ($\Delta M$, $\Delta n$) obtained from the characteristic curve, **characterized in that** the comparison consists in determining the adaptation error (AF), and it is determined whether the adaptation error (AF) is negative or positive and, depending on the sign of the error, a counter ($N_{zu}$, $N_{offen}$) , which differs for the operation "close clutch" from the operation "open clutch", is incremented or decremented, the predetermined value (TZ_AF) being increased when the counter for closing the clutch ($N_{zu}$) is smaller than the negative of a specific threshold ($-N_{sch}$) and the counter for opening the clutch ($N_{offen}$) is greater than the threshold ($N_{sch}$), and the predetermined value (TZ_AF) being decreased if the counter for closing the clutch ($N_{zu}$) is greater than a specific threshold ($-N_{sch}$) and the counter for opening the clutch ($N_{offen}$) is smaller than the negative of the threshold ($-N_{sch}$).

2. Method according to Claim 1, **characterized in that** the parameter is the torque (M) transmissible by the clutch.

3. Method according to one of the preceding claims, **characterized in that** the parameter is the engine speed (n).

4. Method according to one of the preceding claims, **characterized in that** the deviation is fed back to the characteristic curve (4) linearly or nonlinearly.

5. Method according to one of the preceding claims, **characterized in that**, as absolute value, the predetermined value (TZ_AF) is half the hysteresis width ($\Delta M\_Hyst$) of the clutch characteristic curve (4).

6. Method according to one of Claims 1 to 5, **characterized in that** the predetermined value is half the mean hysteresis width ($\Delta M\_Hyst$) of the clutch characteristic curve (4).

**Revendications**

1. Procédé d'adaptation d'une courbe caractéristique d'accouplement (4) qui présente une hystérèse, dans lequel on compare au moins une grandeur caractéristique (M, n) pouvant être obtenue à partir de la courbe caractéristique (4) avec une grandeur caractéristique correspondante mesurée et s'il résulte de la comparaison qu'il existe entre les deux grandeurs caractéristiques un écart qui est supérieur à une valeur prédéfinie (TZ_AF), on procède à un équilibrage de la courbe caractéristique d'accouplement (4), la comparaison consistant en une définition d'une erreur d'adaptation (AF) par calcul de la différence entre la grandeur caractéristique mesurée et la grandeur caractéristique ($\Delta M$, $\Delta n$) obtenue à partir de la courbe caractéristique, **caractérisé en ce que** la comparaison consiste à définir l'erreur d'adaptation (AF) et **en ce qu'**il est recherché si l'erreur d'adaptation (AF) est négative ou positive et en fonction du signe de l'erreur, un compteur ($N_{fermé}$, $N_{ouvert}$) qui est différent pour le processus « fermer l'accouplement » et pour le processus « ouvrir l'accouplement » est augmenté ou diminué, lorsque le compteur pour la fermeture de l'accouplement ($N_{fermé}$) est inférieur à la négative d'un certain seuil ($-N_{seuil}$) et lorsque le compteur pour l'ouverture de l'accouplement (Nouvert) est supérieur au seuil ($N_{seuil}$), la valeur prédéfinie (TZ_AF) étant augmentée, lorsque le compteur pour la fermeture de l'accouplement ($N_{fermé}$) est supérieur à un certain seuil ($N_{seuil}$) et le compteur pour l'ouverture de l'accouplement ($N_{ouvert}$) est inférieur à la négative du seuil ($-N_{seuil}$), la valeur prédéfinie (TZ_AF) étant diminuée.

2. Procédé selon l'une quelconque des revendications précédentes, **caractérisé en ce que** la grandeur caractéristique est le couple (M) transmissible par l'accouplement.

3. Procédé selon l'une quelconque des revendications précédentes, **caractérisé en ce que** la grandeur caractéristique est le régime (n) du moteur.

4. Procédé selon l'une quelconque des revendications précédentes, **caractérisé en ce qu'**on réinjecte l'écart de manière linéaire ou non linéaire sur la courbe caractéristique (4).

5. Procédé selon l'une quelconque des revendications précédentes, **caractérisé en ce que** la valeur prédéfinie (TZ_AF) est en tant que montant la moitié de la largeur d'hystérèse ($\Delta$M_hyst) de la courbe caractéristique (4) de l'accouplement.

6. Procédé selon l'une quelconque des revendications 1 à 5, **caractérisé en ce que** la valeur prédéfinie est la moitié de la largeur moyenne d'hystérèse ($\Delta$M_hyst) de la courbe caractéristique (4) de l'accouplement.

Fig. 1

Fig. 2

**EP 2 009 313 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1418083 A2
- US 2004064232 A1